# EUROPEAN PATENT APPLICATION

(11) **EP 4 361 188 A1**
(43) Date of publication of application: **01.05.2024**
(21) Application number: 22858778.8
(22) Date of filing: 18.08.2022
(51) Int. Cl.: C08F 279/02, C08F 279/04, C08F 220/10, C08F 222/10, C08L 51/04, C08L 63/00, C09J 175/04, C09J 11/08

(54) **GRAFT COPOLYMER, CURABLE RESIN COMPOSITION, AND ADHESIVE COMPOSITION**

(30) Priority: 19.08.2021 KR 20210109742
(71) Applicant: LG Chem, Ltd., Yeongdeungpo-gu Seoul 07336 (KR)
(72) Inventor: PARK, Sung Eun, Daejeon 34122 (KR); YOO, Ki Hyun, Daejeon 34122 (KR); JEONG, Min Ah, Daejeon 34122 (KR); HAN, Sang Hoon, Daejeon 34122 (KR)
(74) Representative: Plasseraud IP
(86) International application number: PCT/KR2022/012363
(87) International publication number: WO 2023/022541

(57) **Abstract**

The present invention relates to a graft copolymer, and to a core-shell type graft copolymer comprising a core comprising a rubbery polymer; and a shell formed by graft polymerizing a graft monomer to the rubbery polymer, wherein the rubbery polymer comprises a conjugated diene-based monomer unit, the graft copolymer comprises the core in 75 wt% to 83 wt%, and a thickness of the shell is 3 nm to 25 nm, a curable resin composition comprising same, and an adhesive composition.

## Description

### TECHNICAL FIELD

### [Cross-reference to Related Applications]

The present application claims the benefit of priority based on Korean Patent Application No. 10-2021-0109742, filed on August 19, 2021, the entire contents of which are incorporated herein by reference.

### [Technical Field]

The present invention relates to a graft copolymer which has excellent particulate dispersibility with respect to a curable resin such as an epoxy resin and may be applied as an impact reinforcing agent with a particulate phase, a curable resin composition comprising same, and an adhesive composition comprising the curable resin composition as a toughening agent.

### BACKGROUND ART

Curable resins represented by an epoxy resin are used in various fields including electrical and electronic products, automotive parts, building materials, or the like. The curable resin is used together with an additive including an inorganic filler, a release agent, rubber particulates having rubbery properties, or the like, rather than being used alone to supplement physical properties, processability, or the like. Among the curable resins, the epoxy resin often shows brittle characteristics, and improvement of impact resistance or adhesion strength is required.

Particularly, in case of applying an epoxy resin to an adhesive composition and applying a toughening agent to solve the defects of the epoxy resin, impact resistance and adhesive strength may be improved by the toughening agent, but due to the interaction between the epoxy resin and the toughening agent, problems arising the change of the glass transition temperature that is the intrinsic characteristic of the epoxy resin may occur. The problems may become factors of deteriorating the performance of the adhesive composition or increasing the viscosity of the adhesive composition, thereby adversely affecting workability.

Accordingly, as a toughening agent for improving the impact resistance and adhesive strength without inducing the performance deterioration of the adhesive composition, a method of using a graft copolymer including a rubbery polymer as an impact reinforcing agent in an epoxy resin has been suggested. The graft copolymer has the particle shape of a core-shell structure including a core including a rubbery polymer and a shell formed on the core through graft polymerization.

Here, in order to apply the graft copolymer as an impact reinforcing agent for an epoxy resin, the graft copolymer is required to disperse in the epoxy resin, and as a method of dispersing the graft copolymer in the epoxy resin, there are a liquid phase dispersion method and a particulate phase dispersion method.

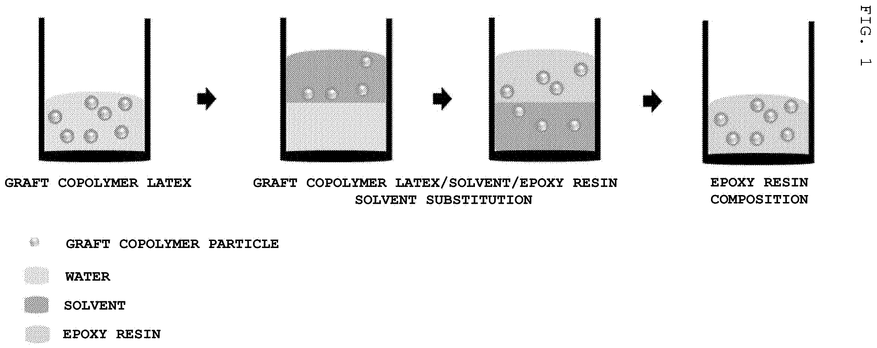

By the liquid phase dispersion method, as shown in FIG. 1, a graft copolymer is dispersed in an epoxy resin by a stepwise solvent substitution method, wherein, in a graft copolymer in a latex state in which the graft copolymer is dispersed in water, the water is substituted with a solvent, and the solvent is substituted with an epoxy resin. Such a liquid phase dispersion method has merits of dispersing the graft copolymer in a homogeneous dispersion matrix of an epoxy resin. However, there are storage problems of storing the graft copolymer in a latex state until being dispersed in order to apply the graft copolymer to the epoxy resin as the impact reinforcing agent, and problems in environmental respects due to the water and the solvent, separately discharged from the substitution process of the graft copolymer and the solvent.

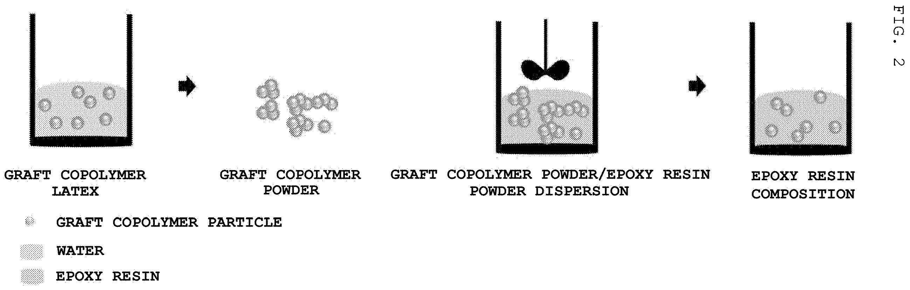

By the particulate phase dispersion method, as shown in FIG. 2, there are merits of low process costs in view of directly dispersing an agglomerated dry powder from a graft copolymer latex, i.e., a particulate phase graft copolymer in an epoxy resin. However, there are problems of substantially very difficult or impossible dispersion of the graft copolymer particulate material when directly introducing into an epoxy resin, because the viscosity of the graft copolymer particulate material becomes very high.

Accordingly, in the application of an impact reinforcing agent to a curable resin composition such as an epoxy resin, in order to improve both processing cost and environmental aspects, and in order to apply the particulate phase dispersion method, the improvement of the particulate dispersibility of a graft copolymer particulate material is required.

### [Prior Art Document]

### [Patent Document]

(Patent Document 1) JP 2006-104328 A

### DISCLOSURE OF THE INVENTION

### TECHNICAL PROBLEM

The present invention has been made to solve the above-described problems of the conventional technique, and has an object of providing a graft copolymer which has excellent particulate dispersibility in a curable resin such as an epoxy resin and may be applied as a particulate phase impact reinforcing agent, and a method of preparing same.

In addition, another object of the present invention is to provide a curable resin composition in which the graft copolymer is applied in a particulate phase, and a method of preparing same.

In addition, another object of the present invention is to provide an adhesive composition in which the curable resin composition is applied as a toughening agent.

### TECHNICAL SOLUTION

In order to solve the above-described tasks, the present invention provides a graft copolymer, a curable resin composition, and an adhesive composition comprising same.
(1) The present invention provides a graft copolymer of a core-shell type, comprising a core comprising a rubbery polymer; and a shell formed by graft polymerizing a graft monomer to the rubbery polymer, wherein the rubbery polymer comprises a conjugated diene-based monomer unit, the graft copolymer comprises the core in 75 wt% to 83 wt%, the core has an average particle diameter of 250 nm to 400 nm, and a thickness of the shell is 3 nm to 25 nm.
(2) The present invention provides the graft copolymer according to (1), wherein the graft monomer comprises an alkyl (meth)acrylate-based monomer.
(3) The present invention provides the graft copolymer according to (1) or (2), wherein the graft monomer comprises a methyl (meth)acrylate monomer, an alkyl (meth)acrylate-based monomer of 2 to 12 carbon atoms and a crosslinkable monomer.
(4) The present invention provides the graft copolymer according to (3), wherein the crosslinkable monomer is polyethylene glycol diacrylate or allyl methacrylate.
(5) The present invention provides the graft copolymer according to any one of (1) to (4), wherein the graft monomer further comprises an aromatic vinyl-based monomer.
(6) The present invention provides the graft copolymer according to any one of (1) to (5), wherein the graft copolymer comprises the core in 79 wt% to 81 wt%, and the shell in 19 wt% to 21 wt%.
(7) The present invention provides the graft copolymer according to any one of (1) to (6), wherein the thickness of the shell is 5 nm to 22nm.
(8) The present invention provides the graft copolymer according to any one of (1) to (7), wherein the graft copolymer has an average particle diameter of 250 nm to 500 nm.
(9) The present invention provides a curable resin composition comprising a continuous phase and a dispersion phase, wherein the continuous phase comprises a curable resin, and the dispersion phase comprises the graft copolymer according to any one of (1) to (8).
(10) The present invention provides the curable resin composition according to (9), wherein the curable resin composition comprises the continuous phase in 50 wt% to 99 wt% and the dispersion phase in 1 wt% to 50 wt%.
(11) The present invention provides the curable resin composition according to (9) or (10), wherein the curable resin is an epoxy resin.
(12) The present invention provides the curable resin composition according to any one of (9) to (11), wherein the curable resin composition has a viscosity at 25°C at 2.4 l/s of 1,500 Pa.s or less.
(13) The present invention provides an adhesive composition comprising a main agent, a toughening agent and a urethane resin, wherein the toughening agent is the curable resin composition according to any one of (9) to (12), and the toughening agent is comprised in 10 wt% to 20 wt%.
(14) The present invention provides the adhesive composition according to (13), wherein the adhesive composition has a G' value shown at -35°C of 900 MPa to 1,100 MPa, on a storage modulus (G') change graph in accordance with temperature, derived by dynamic viscoelasticity analysis (torsional mode, frequency of 1 Hz, strain of 0.1 %, and temperature rise rate of 5°C/min) by Advanced Rheometric Expansion System (ARES) on a cured specimen.
(15) The present invention provides the adhesive composition according to (13) or (14), wherein the adhesive composition has a G' value shown at 25°C of 530 MPa to 630 MPa, on a storage modulus (G') change graph in accordance with temperature, derived by dynamic viscoelasticity analysis (torsional mode, frequency of 1 Hz, strain of 0.1 %, and temperature rise rate of 5°C/min) by Advanced Rheometric Expansion System (ARES) on a cured specimen.
(16) The present invention provides the adhesive composition according to any one of (13) to (15), wherein the adhesive composition has a viscosity at 25°C at 2.4 l/s of 250 Pa.s to 750 Pa.s.

### ADVANTAGEOUS EFFECTS

The graft copolymer of the present invention has excellent particulate dispersibility in a curable resin such as an epoxy resin, and shows dispersing effects in a curable resin composition by a particulate phase dispersion method.

The curable resin composition of the present invention could apply a graft copolymer in a particulate phase as an impact reinforcing agent, and shows effects of excellent mechanical properties such as impact resistance due to the graft copolymer dispersed in the curable resin composition.

The adhesive composition of the present invention includes the curable resin composition as a toughening agent and shows excellent effects of impact resistance and impact strength.

### BRIEF DESCRIPTION OF DRAWINGS

FIG. 1 is a process diagram briefly showing a liquid phase dispersion method for dispersing a graft copolymer in an epoxy resin.
FIG. 2 is a process diagram briefly showing a particulate phase dispersion method for dispersing a graft copolymer in an epoxy resin.
FIG. 3 is an image taken at 10,000X magnification using a transmission electron microscope on a specimen prepared using a graft copolymer prepared in Example 3 of the present invention.
FIG. 4 is an image taken at 25,000x magnification using a transmission electron microscope on a specimen prepared using an epoxy resin composition prepared using a graft copolymer of Example 3 of the present invention.

### BEST MODE FOR CARRYING OUT THE INVENTION

Hereinafter, the present invention will be described in more detail to assist the understanding of the present invention.

It will be understood that words or terms used in the description and claims of the present invention shall not be interpreted as the meaning defined in commonly used dictionaries. It will be understood that the words or terms should be interpreted as having a meaning that is consistent with their meaning in the technical idea of the invention, based on the principle that an inventor may properly define the meaning of the words to best explain the invention.

The term "monomer unit" in the present invention may represent a component or a structure derived from the monomer or the material itself, in a particular embodiment, may mean a repeating unit formed in the polymer during polymerizing a polymer through the participation of the monomer injected in polymerization reaction.

The term "composition" used in the present invention includes a reaction product and a decomposition product formed from the materials of a corresponding composition as well as a mixture of materials including the corresponding composition.

The present invention provides a graft copolymer which may be applied as an impact reinforcing agent in a curable resin composition. The graft copolymer according to the present invention has improved particulate dispersibility with respect to a curable resin such as an epoxy resin, and is a core-shell type graft copolymer comprising a core comprising a rubbery polymer; and a shell formed by graft polymerizing a graft monomer to the rubbery polymer, wherein the rubbery polymer comprises a conjugated diene-based monomer unit, the graft copolymer comprises the core in 75 wt% to 83 wt%, the core has an average particle diameter of 250 nm to 400 nm, and a thickness of the shell is 3 nm to 25 nm. Accordingly, the dispersion of the graft copolymer in a particulate phase dispersion method in a curable resin composition may be possible.

According to an embodiment of the present invention, in the core-shell type graft copolymer, the core may mean the rubbery polymer component itself forming the core or the core layer of the graft copolymer, and the shell may mean a polymer component or a copolymer component forming a shell or a shell layer as a shell type wrapping the core by graft polymerization to the rubbery polymer. That is, the core including the rubbery polymer may be the rubbery polymer itself, and the shell may mean a graft layer formed by graft polymerization of a graft monomer to the rubbery polymer.

According to an embodiment of the present invention, if the graft copolymer is applied as an impact reinforcing agent, the rubbery polymer is a component for providing impact resistance and may include a conjugated diene-based monomer unit. In a particular embodiment, the rubbery polymer may be a conjugated diene-based rubbery polymer. In a more particular embodiment, the conjugated diene-based rubbery polymer may be one or more selected from the group consisting of a homopolymer of a conjugated diene-based monomer and a copolymer of aromatic vinyl-based monomer-conjugated diene-based monomer.

According to an embodiment of the present invention, the conjugated diene-based monomer of the rubbery polymer may be one or more selected from the group consisting of 1,3-butadiene, 2,3-dimehtyl-1,3-butadiene, piperylene, 3-butyl-1,3-octadiene, isoprene and 2-phenyl-1,3-butadiene, particularly, 1,3-butadiene.

According to an embodiment of the present invention, the aromatic vinyl-based monomer of the rubbery polymer may be one or more selected from the group consisting of styrene, α-methylstyrene, 3-methylstyrene, 4-methylstyrene, 4-propylstyrene, 1-vinylnaphthalene, 4-cyclohexylstyrene, 4-(p-methylphenyl)styrene and 1-vinyl-5-hexylnaphthalene, particularly, styrene.

According to an embodiment of the present invention, if the graft copolymer is applied as an impact reinforcing agent, the shell is a component for improving compatibility and mechanical properties and may be a graft layer formed by graft polymerizing a graft monomer to the rubbery polymer, as described above. In a particular embodiment, the graft monomer graft polymerized to the rubbery polymer for forming the shell, may include an alkyl (meth)acrylate-based monomer.

According to an embodiment of the present invention, the alkyl (meth)acrylate-based monomer of the graft monomer may be an alkyl (meth)acrylate-based monomer of 1 to 12 carbon atoms, particularly, one or more selected from the group consisting of methyl methacrylate, ethyl methacrylate, propyl methacrylate, n-butyl methacrylate, methyl acrylate, ethyl acrylate, propyl acrylate and n-butyl acrylate.

According to an embodiment of the present invention, the alkyl (meth)acrylate-based monomer of the graft monomer may be two or more monomers selected from the group consisting of alkyl (meth)acrylate-based monomers of 1 to 12 carbon atoms, particularly, two or more selected from the group consisting of methyl methacrylate, ethyl methacrylate, propyl methacrylate, n-butyl methacrylate, methyl acrylate, ethyl acrylate, propyl acrylate and n-butyl acrylate.

According to an embodiment of the present invention, the alkyl (meth)acrylate-based monomer of the graft monomer may be a methyl (meth)acrylate monomer, and an alkyl (meth)acrylate-based monomer of 2 to 12 carbon atoms, and in this case, the weight average molecular weight of the shell may be reduced even further. Accordingly, the swelling of the shell during dispersing the graft copolymer in the curable resin may be minimized to prevent the increase of a viscosity. In this case, the alkyl (meth)acrylate-based monomer may include: 50 wt% to 99 wt%, 60 wt% to 90 wt%, or 70 wt% to 85 wt% of the methyl (meth)acrylate monomer; and 1 wt% to 50 wt%, 10 wt% to 40 wt%, or 15 wt% to 30 wt% of the alkyl (meth)acrylate-based monomer of 2 to 12 carbon atoms.

According to an embodiment of the present invention, the graft monomer may further include a crosslinkable monomer in addition to the alkyl (meth)acrylate-based monomer. That is, the graft monomer may include a methyl (meth)acrylate monomer, an alkyl (meth)acrylate-based monomer of 2 to 12 carbon atoms and a crosslinkable monomer.

According to an embodiment of the present invention, the crosslinkable monomer is for improving shell forming capacity by crosslinking during forming the shell by the graft monomer and at the same time, for further improving compatibility and mechanical properties by the shell, and may be one or more selected from a (meth)acryl-based crosslinkable monomer such as ethylene glycol di(meth)acrylate, polyethylene glycol di(meth)acrylate, 1,6-hexanediol di(meth)acrylate, allyl (meth)acrylate, trimethylolpropane tri(meth)acrylate and pentaerythritol tetra(meth)acrylate; and a vinyl-based crosslinkable monomer such as divinylbenzene, divinylnaphthalene and diallyl phthalate, particularly, polyethylene glycol diacrylate or allyl methacrylate.

According to an embodiment of the present invention, the graft monomer may further include an aromatic vinyl-based monomer. That is, the graft monomer may include a methyl (meth)acrylate monomer, an alkyl (meth)acrylate-based monomer of 2 to 12 carbon atoms and an aromatic vinyl-based monomer.

According to an embodiment of the present invention, the aromatic vinyl-based monomer of the graft monomer may be one or more selected from the group consisting of styrene, α-methylstyrene, 3-methylstyrene, 4-methylstyrene, 4-propylstyrene, 1-vinylnaphthalene, 4-cyclohexylstyrene, 4-(p-methylphenyl)styrene and 1-vinyl-5-hexylnaphthalene, particularly, styrene.

According to an embodiment of the present invention, if the graft monomer further includes an aromatic vinyl-based monomer, the aromatic vinyl-based monomer may be included in 0.1 wt% to 10.0 wt%, 0.5 wt% to 5.0 wt%, or 0.8 wt% to 2.0 wt% based on the total amount of the graft monomer.

In the graft copolymer according to the present invention, in order to make its dispersion possible in a curable resin composition by a particulate phase dispersion method, it is very important to control the amount of the core in the graft copolymer and the thickness of the shell.

According to an embodiment of the present invention, the graft copolymer may include the core in 75 wt% to 83 wt%, particularly, 75 wt% or more, 76 wt% or more, 77 wt% or more, 78 wt% or more, or 79 wt% or more, and 83 wt% or less, 82 wt% or less, or 81 wt% or less. In addition, accordingly, the graft copolymer may include the shell in 17 wt% to 18 wt%, or 19 wt% or more, and 25 wt% or less, 24 wt% or less, 23 wt% or less, 22 wt% or less, or 21 wt% or less. Within the amount ranges of the core and shell, if the graft copolymer is dispersed in the curable resin, the swelling of the shell may be minimized to prevent the increase of a viscosity, while sufficiently securing the compatibility of the curable resin and the graft copolymer. On the contrary, if the graft copolymer includes the core in an amount less than the above-described range, the amount of the shell in the graft copolymer may be increased by that much, and accordingly, there are problems of arising the swelling of the shell having high affinity with the curable resin, increasing a viscosity and degrading dispersibility. In addition, if the graft copolymer includes the core in an amount greater than the above-described range, the compatibility of the curable resin and the graft copolymer may drop sharply, and the increase of the viscosity due to the swelling of the shell may be prevented. However, there are problems of not achieving dispersion substantially. Meanwhile, the amounts of the core and the shell may be derived from the amount ratio of the rubbery polymer and graft monomer, injected during preparing the graft copolymer.

According to an embodiment of the present invention, the core may have an average particle diameter of 250 nm to 400 nm, particularly, an average particle diameter of 250 nm to 350 nm. Within this range, the increase of the viscosity during dispersing the graft copolymer in the curable resin may be prevented.

According to an embodiment of the present invention, the thickness of the shell may be 3 nm or more, 4 nm or more, 5 nm or more, 6 nm or more, 7 nm or more, 8 nm or more, 9 nm or more, 10 nm or more, 11 nm or more, 12 nm or more, 13 nm or more, or 14 nm or more, and 25 nm or less, 24 nm or less, 23 nm or less, 22 nm or less, 21 nm or less, 20 nm or less, 19 nm or less, 18 nm or less, 17 nm or less, 16 nm or less, 15 nm or less, 14 nm or less, 13 nm or less, 12 nm or less, or 11 nm or less. Within this range, the swelling of the shell may be minimized to prevent the increase of a viscosity, while sufficiently securing the compatibility of the curable resin and the graft copolymer during dispersing the graft copolymer in the curable resin. On the contrary, if the thickness of the shell is greater than the above-range, there are problems in that the shell having high affinity with the curable resin may swell, the viscosity may increase, and the dispersibility may be deteriorated, and if the thickness of the shell is smaller than the above-range, there are problems in that the graft copolymer may present in a particle type having low affinity with the curable resin, and dispersibility may decrease. The thickness of the shell may be controlled by the amount of the rubbery polymer or by the control of the injection amounts of an initiator and an activator during graft polymerizing a graft monomer in the presence of the rubbery polymer.

Like this, by controlling the amount of the core and the thickness of the shell in the graft copolymer according to the present invention, dispersion by a particulate phase dispersion method in a curable resin composition may be possible.

According to an embodiment of the present invention, the thickness of the shell may be calculated and confirmed by various methods. In a particular embodiment, the thickness of the shell may be calculated according to Mathematical Formula 1 below from the average particle diameter of the core and the average particle diameter of the graft copolymer.Thickness of shell (nm) = average particle diameter of graft copolymer (nm) = average particle diameter of core (nm)

In addition, the thickness of the shell could be confirmed by manufacturing a thin foil after drying the graft copolymer in a vacuum oven to obtain a solid and using a Microtome, staining the thin foil with osmium tetroxide vapor to prepare a specimen, taking a picture at 10,000× magnification using a transmission electron microscope with respect to the specimen, and measuring the thickness of the shell for the graft copolymer particle.

In addition, the thickness of the shell could be confirmed by manufacturing a thin foil by curing using polyetheramine of the epoxy resin composition prepared using the graft copolymer at room temperature and using a Microtome, staining the thin foil with osmium tetroxide vapor to prepare a specimen, taking a picture at 25,000x magnification using a transmission electron microscope with respect to the specimen, and measuring the particle size of the core and the thickness of the shell for each dispersion phase.

According to an embodiment of the present invention, the graft copolymer may have an average particle diameter of 250 nm or more, and 500 nm or less, 450 nm or less, or 400 nm or less, and within this range, the increase of viscosity during dispersing the graft copolymer in the curable resin may be prevented.

In addition, the present invention provides a method of preparing the graft copolymer. The method of preparing a graft copolymer comprises: a step of preparing a rubbery polymer latex comprising a conjugated diene-based rubbery polymer (S1); and a step of injecting a graft monomer and graft polymerizing in the presence of 75 wt% to 83 wt% (based on the solid content) of the rubbery polymer latex to prepare a graft copolymer latex comprising a core-shell type graft copolymer (S2). The thickness of the shell of the graft copolymer prepared in step (S2) may be 3 nm to 25 nm.

According to an embodiment of the present invention, in the method of preparing a graft copolymer, the type and amount of the monomer for performing each step may be the same as the type and amount of the monomer of the graft copolymer previously described.

According to an embodiment of the present invention, step (S1) is a step for preparing a conjugated diene-based rubbery polymer forming a core or a core layer in the core-shell type graft copolymer, and step (S2) is a step for graft polymerizing to the conjugated diene-based rubbery polymer to form a shell or a shell layer in a shell type wrapping the core, wherein the thickness of the shell is controlled to 3 nm to 25 nm.

According to an embodiment of the present invention, step (S1) and step (S2) may be performed by emulsion polymerization, and may be performed in the presence of an emulsifier and an initiator, injected for emulsion polymerization together with an electrolyte, a molecular weight modifier, an activator, or the like. In this case, in performing step (S1), the average particle diameter of the conjugated diene-based rubbery polymer particles may be controlled by the injection amount of the emulsifier. In performing step (S2), the thickness of the shell may be controlled by controlling the amount of the rubbery polymer, by controlling the injection amounts of the initiator and/or the activator, or by continuously injecting the graft monomer.

According to an embodiment of the present invention, the emulsifier may be one or more selected from the group consisting of a fatty acid-based emulsifier and a rosin acid-based emulsifier, and in this case, excellent effects of latex stability may be achieved.

According to an embodiment of the present invention, the injection amount of the emulsifier in step (S1) may be 0.1 parts by weight to 3.4 parts by weight, 1.0 part by weight to 3.3 parts by weight, 1.5 parts by weight to 3.2 parts by weight, 2.0 parts by weight to 3.2 parts by weight, or 2.1 parts by weight to 3.1 parts by weight, based on 100 parts by weight of the monomer for polymerizing the rubbery polymer.

According to an embodiment of the present invention, the injection amount of the emulsifier of step (S2) may be 0.1 parts by weight to 1.0 part by weight, 0.1 parts by weight to 0.5 parts by weight, or 0.1 parts by weight to 0.3 parts by weight based on 100 parts by weight of the total sum of the rubbery polymer and the monomer for polymerizing the graft copolymer, and within this range, effects of excellent latex stability may be achieved.

According to an embodiment of the present invention, step (S1) may be performed using a water-soluble initiator which may be used during emulsion polymerization, and the water-soluble initiator may be potassium persulfate, sodium persulfate, ammonium persulfate, or the like. Step (S2) may be performed by radical polymerization using a peroxide-based, redox, or azo-based initiator which may be sued for emulsion polymerization, and the redox initiator may be, for example, one or more selected from the group consisting of t-butyl hydroperoxide, diisopropylbenzene hydroperoxide and cumene hydroperoxide, and in this case, effects of providing stable polymerization environment may be achieved. If the redox initiator is used, this step may be performed by further including ferrous sulfide, sodium ethylenediaminetetraacetate and sodium formaldehyde sufoxylate as a redox catalyst that is an activator, and the thickness of the shell may be controlled to 3 nm to 25 nm by controlling the injection amounts of the redox initiator and the redox catalyst.

According to an embodiment of the present invention, step (S2) may be performed by continuously injecting a graft monomer. In performing step (S2), if the graft monomer is injected in batch prior to the initiation of the graft polymerization reaction, problems of increasing the weight average molecular weight of the shell may arise.

According to an embodiment of the present invention, the emulsion polymerization of step (S1) and step (S2) may be performed in an aqueous solvent, and the aqueous solvent may be ion exchange water.

According to an embodiment of the present invention, the method of preparing a graft copolymer composition may include a step of agglomerating and drying for obtaining the graft copolymer latex prepared in step (S2) as a particulate phase (S3).

In addition, the present invention provides a curable resin composition. The curable resin composition may include the graft copolymer as an impact reinforcing agent, and in a particular embodiment, the graft copolymer may be dispersed in a particulate phase.

According to an embodiment of the present invention, the curable resin composition may include a continuous phase and a dispersion phase, the continuous phase may include a curable resin, and the dispersion phase may include a graft copolymer. In a particular embodiment, the curable resin composition may include: the continuous phase in 50 wt% or more, and 99 wt% or less, 80 wt% or less, or 70 wt% or less; and the dispersion phase in 1 wt% or more, 20 wt% or more, or 30 wt% or more, and 50 wt% or less.

According to an embodiment of the present invention, the curable resin may be a thermosetting resin or a photocurable resin, particularly, one or more selected from the group consisting of an epoxy resin, a phenol resin, an unsaturated polyester resin, a melamine resin and a urea resin, more particularly, an epoxy resin.

According to an embodiment of the present invention, the epoxy resin may include at least two or more epoxy bonds, particularly, one or more selected from the group consisting of a bisphenol A-type epoxy resin, a bisphenol F-type epoxy resin, a bisphenol AD-type epoxy resin, a bisphenol E-type epoxy resin, a naphthalene-type epoxy resin, a biphenyl-type epoxy resin, a dicyclopentadiene-type epoxy resin, a phenol novolac-type epoxy resin, an aliphatic cyclic epoxy resin and a glycidyl amine-type epoxy resin.

According to an embodiment of the present invention, the curable resin composition may have a viscosity at 25°C at 2.4 l/s of 1,500 Pa.s or less, particularly, 1,450 Pa.s or less, 1,400 Pa.s or less, 1,350 Pa.s or less, 1,300 Pa.s or less, 1,290 Pa.s or less, 1,280 Pa.s or less, 1,270 Pa.s or less, 1,260 Pa.s or less, 1,250 Pa.s or less, 1,240 Pa.s or less, 1,230 Pa.s or less, or 1,220 Pa.s or less, and 100 Pa.s or more, 200 Pa.s or more, 300 Pa.s or more, 400 Pa.s or more, 500 Pa.s or more, 600 Pa.s or more, 700 Pa.s or more, 800 Pa.s or more, 900 Pa.s or more, 1,000 Pa.s or more, or 1,050 Pa.s or more. Within this range, if the curable resin composition is applied in an adhesive composition, effects of improved processability and excellent impact resistance may be shown.

In addition, the present invention provides a method of preparing a curable resin composition for preparing the curable resin composition.

According to an embodiment of the present invention, the method of preparing a curable resin composition includes: a step of preparing a graft copolymer latex comprising the graft copolymer (S10); a step of agglomerating and drying the graft copolymer latex prepared in step (S10) to prepare a graft copolymer particulate material (S20); and a step of mixing a curable resin and the graft copolymer particulate material prepared in step (S20) to prepare a curable resin composition (S30), wherein step (S30) is performed by dispersing using a stirrer.

According to an embodiment of the present invention, step (S10) is a step for preparing the graft copolymer and may be performed by the method of preparing a graft copolymer, described above.

According to an embodiment of the present invention, step (S20) is a step for obtaining the graft copolymer prepared in step (S10) in a particulate phase and may be performed by agglomerating and drying the graft copolymer latex prepared in step (S10).

According to an embodiment of the present invention, the agglomeration of step (S20) may be performed by adding a coagulant to the graft copolymer latex. In addition, the agglomeration of step (S20) may be performed by acid agglomeration such as an aqueous sulfuric acid solution and by salt agglomeration such as sodium chloride and sodium sulfate, and both the acid agglomeration and the salt agglomeration may be performed as necessary. In this case, the acid agglomeration and the salt agglomeration may be performed simultaneously or step by step. If the agglomeration is performed step by step, the acid agglomeration may be performed first, and then, the salt agglomeration may be performed, or the salt agglomeration may be performed first, and then, the acid agglomeration may be performed. In addition, the agglomeration of step (S20) may be performed in the presence of an organic dispersant as necessary.

According to an embodiment of the present invention, the drying of step (S20) may be performed by a common drying method, and a step of dewatering the agglomerated graft copolymer latex may be further included prior to the drying as necessary.

According to an embodiment of the present invention, step (S30) is a step of mixing the curable resin and the graft copolymer by the above-described particulate phase dispersion method in applying the graft copolymer to the curable resin as an impact reinforcing agent, and may be performed by injecting the graft copolymer particulate material to the curable resin and mixing. As described above, the graft copolymer according to the present invention has excellent particulate dispersibility and may be directly dispersed in the curable resin in a particulate phase. In a particular embodiment, the viscosity at 25°C at 2.4 l/s of the curable resin composition prepared in step (S30) may be 1,500 Pa.s or less, particularly, 1,450 Pa.s or less, 1,400 Pa.s or less, 1,350 Pa.s or less, 1,300 Pa.s or less, 1,290 Pa.s or less, 1,280 Pa.s or less, 1,270 Pa.s or less, 1,260 Pa.s or less, 1,250 Pa.s or less, 1,240 Pa.s or less, 1,230 Pa.s or less, or 1,220 Pa.s or less, and 100 Pa.s or more, 200 Pa.s or more, 300 Pa.s or more, 400 Pa.s or more, 500 Pa.s or more, 600 Pa.s or more, 700 Pa.s or more, 800 Pa.s or more, 900 Pa.s or more, 1,000 Pa.s or more, or 1,050 Pa.s or more. Within this range, the viscosity of the graft copolymer particulate material is low, and dispersibility is excellent.

In addition, the present invention provides an adhesive composition including the curable resin composition. The adhesive composition may include the curable resin composition as a toughening agent.

According to an embodiment of the present invention, the adhesive composition may include a main agent, a toughening agent and a urethane resin, and here, the toughening agent may be the above-described curable resin composition.

According to an embodiment of the present invention, the adhesive composition may include the toughening agent in 10 wt% to 20 wt%, particularly, 10 wt% or more, 11 wt% or more, 12 wt% or more, 13 wt% or more, or 14 wt% or more, and 20 wt% or less, 19 wt% or less, 18 wt% or less, 17 wt% or less, or 16 wt% or less. Within this range, the graft copolymer content in the adhesive composition may be suitably maintained, and impact resistance and adhesive strength may be secured simultaneously.

According to an embodiment of the present invention, the main agent may be a thermosetting resin or a photocurable resin, particularly, one or more selected from the group consisting of an epoxy resin, a phenol resin, an unsaturated polyester resin, a melamine resin and a urea resin, more particularly, an epoxy resin, and considering the compatibility of the main agent and the toughening agent, the main agent may be a curable resin that is the same as the curable resin of the toughening agent.

According to an embodiment of the present invention, the urethane resin may use any urethane resin without specific limitation as long as it could be used in an adhesive composition. In addition, the adhesive composition may further include a curing agent, a curing accelerator, a filler, a diluent and a moisture remover in addition to the main agent, the toughening agent and the urethane resin.

According to an embodiment of the present invention, the curing agent may be one or more selected from the group consisting of an acid anhydride curing agent, an amine-based curing agent and a phenol-based curing agent.

According to an embodiment of the present invention, the acid anhydride curing agent may be one or more selected from the group consisting of phthalic anhydride, methyltetrahydrophthalic anhydride, methylhexahydrophthalic anhydride, hexahydrophthalic anhydride, tetrahydrophthalic anhydride, trialkyl tetrahydrophthalic anhydride, methyl himic anhydride, methylcyclohexene dicarboxylic anhydride, trimellitic anhydride, pyromellitic anhydride, benzophenonetetracarboxylic anhydride, ethylene glycol bistrimellitate, glycerol tristrimellitate, dodecenyl succinic anhydride, polyazellaic anhydride and poly (ethyl octadecane diacid) anhydride.

According to an embodiment of the present invention, the amine-based curing agent may be one or more selected from the group consisting of 2,5(2,6)-bis(aminomethyl) bicyclo[2,2,1]heptane, isophoronediamine, ethylenediamine, diethylenetriamine, triethylenetetramine, tetraethylenepentamine, diethyl aminopropylamine, bis(4-amino-3-methyl dicyclohexyl)methane, diaminocyclohexylmethane, bis(aminomethyl) cyclohexane, metaphenylenediamine, diaminophenylmethane, diaminodiphenylsulfone, diaminodiethyl diphenylmethane, diethyl toluenediamine, 3,3'-diaminodiphenylsulfone (3,3'-DDS), 4,4'-diaminodiphenylsulfone (4,4'-DDS), diaminodiphenyl ether (DADPE), bisaniline, benzyl dimethylaniline, 3,3'-dichloro-4,4'-diaminodiphenylmethane (MOCA), 4,4'-diaminodiphenylmethane, 2,4'-diaminodiphenylmethane, 3,3'-diaminodiphenylmethane, 3,4'-diaminodiphenylmethane, 2,2'-diaminobiphenyl, 3,3'-diaminobiphenyl, 2,4-diaminophenol, 2,5-diaminophenol, o-phenylenediamine, m-phenylenediamine, p-phenylenediamine, 2,3-tolylene diamine, 2,4-tolylene diamine, 2,5-tolylene diamine, 2,6-tolylene diamine, 3,4-tolylene diamine, methyl thio toluene diamine, diethyl toluenediamine and dicyandiamide.

According to an embodiment of the present invention, the phenol-based curing agent may be one or more selected from the group consisting of a phenol novolac resin, a cresol novolac resin, bisphenol A, bisphenol F, bisphenol AD and diallyl derivatives of bisphenols.

According to an embodiment of the present invention, on a storage modulus (G') change graph in accordance with temperature, derived by dynamic viscoelasticity analysis (torsional mode, frequency of 1 Hz, strain of 0.1 %, and temperature rise rate of 5°C/min) by Advanced Rheometric Expansion System (ARES) on a cured specimen, the adhesive composition may have a G' value shown at -35°C of 900 MPa to 1,100 MPa, particularly, 910 MPa or more, 920 MPa or more, 930 MPa or more, 940 MPa or more, 950 MPa or more, 960 MPa or more, or 970 MPa or more, and 1,100 MPa or less, 1,090 MPa or less, 1,080 MPa or less, 1,070 MPa or less, 1,060 MPa or less, 1,050 MPa or less, 1,040 MPa or less, 1,030 MPa or less, 1,020 MPa or less, 1,010 MPa or less, 1,000 MPa or less, or 990 MPa or less. Here, on the storage modulus (G') change graph, the G' value shown at -35°C is for predicting the change of destruction behavior according to the presence of the graft copolymer in the adhesive composition in a low temperature range, and if the G' value shown at -35°C is within the range, effects of excellent impact resistance at a low temperature of the adhesive composition may be achieved.

According to an embodiment of the present invention, on a storage modulus (G') change graph in accordance with temperature, derived by dynamic viscoelasticity analysis (torsional mode, frequency of 1 Hz, strain of 0.1 %, and temperature rise rate of 5°C/min) by Advanced Rheometric Expansion System (ARES) on a cured specimen, the adhesive composition may have a G' value shown at 25°C of 530 MPa to 630 MPa, particularly, 535 MPa or more, 540 MPa or more, 545 MPa or more, 546 MPa or more, 547 MPa or more, 548 MPa or more, or 549 MPa or more, and 620 MPa or less, 610 MPa or less, 600 MPa or less, 590 MPa or less, 580 MPa or less, 570 MPa or less, or 560 MPa or less. Here, on the storage modulus (G') change graph, the G' value shown at 25°C is for predicting the change of destruction behavior according to the presence of the graft copolymer in the adhesive composition in a room temperature range, and if the G' value shown at 25°C is within the range, effects of excellent impact resistance at room temperature of the adhesive composition may be achieved.

According to an embodiment of the present invention, the adhesive composition may have a viscosity at 25°C at 2.4 l/s of 250 Pa.s to 750 Pa.s, particularly, 250 Pa.s or more, 300 Pa.s or more, 350 Pa.s or more, or 400 Pa.s or more, and 750 Pa.s or less, 700 Pa.s or less, 650 Pa.s or less, 600 Pa.s or less, 550 Pa.s or less, or 500 Pa.s or less. Within this range, if the curable resin composition is applied in an adhesive composition, effects of improved processability and excellent impact resistance may be achieved.

According to an embodiment of the present invention, the adhesive composition may further include an additive in addition to the main agent, the toughening agent and the urethane resin. The additive may be a releasing agent such as silicon oil, natural wax, and synthetic wax; a particulate material such as crystalline silica, molten silica, calcium silicate and alumina; fiber such as glass fiber and carbon fiber; a flame retardant such as antimony trioxide; a halogen trapping agent such as hydrotalcite and rare earth oxides; a colorant such as carbon black and iron oxide red; and a silane coupling agent.

Hereinafter, embodiments of the present invention will be explained in detail so that a person skilled in the art could easily perform the present invention. However, the present invention may be accomplished in various other types and is not limited to the embodiments explained herein.

### Examples and Comparative Examples

### Example 1

### <Preparation of rubbery polymer latex>

To a polymerization reactor (autoclave) substituted with nitrogen, 75 parts by weight of ion exchange water, 60 parts by weight of 1,3-butadiene, 1.4 parts by weight of potassium rosinate, 0.6 parts by weight of potassium oleate, 0.9 parts by weight of potassium carbonate (K₂CO₃), 0.3 parts by weight of t-dodecylmercaptan, and 0.3 parts by weight of potassium persulfate (K₂S₂O₈) were added in batch, based on total 100 parts by weight of 1,3-butadiene, and polymerization was performed at a reaction temperature of 70°C. Then, 0.7 parts by weight of potassium oleate was injected in batch, at a point where a polymerization conversion ratio reached 30% to 40%, 20 parts by weight of 1,3-butadiene was injected in batch, and polymerization was continued at a reaction temperature of 70°C. Then, after a polymerization conversion ratio reached 60%, 20 parts by weight of 1,3-butadiene was injected in batch, a reaction temperature was raised to 80°C, polymerization was continuously performed, and the reaction was finished at a point where a polymerization conversion ratio reached 95%. Total time consumed for the polymerization was 23 hours, the gel content of a rubbery polymer latex obtained was 76%, and the average particle diameter of rubbery polymer particles was 300 nm.

In this case, the polymerization conversion ratio was calculated as the ratio of the solid weight of the rubbery polymer thus obtained with respect to the solid weight of monomers injected.

### <Preparation of graft copolymer latex>

To a closed polymerization reactor substituted with nitrogen, based on total 100 parts by weight of the rubbery polymer latex (based on the solid content), methyl methacrylate, n-butyl acrylate and styrene, 75 parts by weight of the rubbery polymer latex prepared based on the solid content was injected, and 200 parts by weight of ion exchange water, 0.2 parts by weight of potassium oleate, 0.036 parts by weight of ferrous sulfide, 0.2 parts by weight of sodium ethylenediaminetetraacetate, 0.2 parts by weight of sodium formaldehyde sulfoxylate and 0.4 parts by weight of t-butyl hydroperoxide were injected in batch. Then, while continuously injecting 20 parts by weight of methyl methacrylate, 3.75 parts by weight of n-butyl acrylate and 1.25 parts by weight of styrene for 3 hours, polymerization was performed at a reaction temperature of 60°C for 4 hours to prepare a graft copolymer latex. The final polymerization conversion ratio was 99%, and the average particle diameter of the graft copolymer particles was 325 nm.

The polymerization conversion ratio was calculated as the ratio of the solid weight of the graft copolymer thus obtained with respect to the solid weight of the rubbery polymer and monomers injected.

### <Preparation of graft copolymer particulate material>

The graft copolymer latex thus prepared was diluted in distilled water so as to be 15 wt% based on the solid content, the resultant was added to an agglomeration bath, and the internal temperature of the agglomeration bath was raised to 45°C. After that, an IR1076 antioxidant was injected based on 100 parts by weight of the solid content of the graft copolymer, stirring was performed while adding an aqueous sulfuric acid solution to agglomerate, a graft copolymer and water were separated, and dewatering and drying were performed to prepare a graft copolymer particulate material.

### Example 2

The same method as in Example 1 was performed during preparing a graft copolymer latex except for injecting 79 parts by weight of the rubbery polymer latex based on the solid content instead of 75 parts by weight, 16.8 parts by weight of the methyl methacrylate instead of 20 parts by weight, 3.15 parts by weight of the n-butyl acrylate instead of 3.75 parts by weight, and 1.05 parts by weight of the styrene instead of 1.25 parts by weight, in Example 1, to prepare a graft copolymer particulate material.

In this case, the final polymerization conversion ratio of the graft copolymer latex was 98.5%, and the average particle diameter of the graft copolymer particles was 320 nm.

### Example 3

The same method as in Example 1 was performed during preparing a graft copolymer latex except for injecting 80 parts by weight of the rubbery polymer latex based on the solid content instead of 75 parts by weight, 16 parts by weight of the methyl methacrylate instead of 20 parts by weight, 3 parts by weight of the n-butyl acrylate instead of 3.75 parts by weight, and 1 part by weight of the styrene instead of 1.25 parts by weight, in Example 1, to prepare a graft copolymer particulate material.

In this case, the final polymerization conversion ratio of the graft copolymer latex was 98.3%, and the average particle diameter of the graft copolymer particles was 318 nm.

### Example 4

The same method as in Example 1 was performed during preparing a graft copolymer latex except for injecting 81 parts by weight of the rubbery polymer latex based on the solid content instead of 75 parts by weight, 15.2 parts by weight of the methyl methacrylate instead of 20 parts by weight, 2.85 parts by weight of the n-butyl acrylate instead of 3.75 parts by weight, and 0.95 parts by weight of the styrene instead of 1.25 parts by weight, in Example 1, to prepare a graft copolymer particulate material.

In this case, the final polymerization conversion ratio of the graft copolymer latex was 98.4%, and the average particle diameter of the graft copolymer particles was 315 nm.

### Example 5

The same method as in Example 1 was performed during preparing a graft copolymer latex except for injecting 83 parts by weight of the rubbery polymer latex based on the solid content instead of 75 parts by weight, 13.6 parts by weight of the methyl methacrylate instead of 20 parts by weight, 2.55 parts by weight of the n-butyl acrylate instead of 3.75 parts by weight, and 0.85 parts by weight of the styrene instead of 1.25 parts by weight, in Example 1, to prepare a graft copolymer particulate material.

In this case, the final polymerization conversion ratio of the graft copolymer latex was 98.6%, and the average particle diameter of the graft copolymer particles was 310 nm.

### Example 6

The same method as in Example 3 was performed during preparing a rubbery polymer latex except for injecting 1.5 parts by weight of the potassium rosinate instead of 1.4 parts by weight, and 0.8 parts by weight of the potassium oleate instead of 0.6 parts by weight, in Example 3, to prepare a graft copolymer particulate material.

During preparing the rubbery polymer latex, the total time consumed for polymerization was 23 hours, the gel content of the rubbery polymer latex obtained was 74%, and the average particle diameter of the rubbery polymer particles was 250 nm.

In addition, the final polymerization conversion ratio of the graft copolymer latex was 98.2%, and the average particle diameter of the graft copolymer particles was 270 nm.

### Example 7

The same method as in Example 3 was performed during preparing a rubbery polymer latex except for injecting 1.3 parts by weight of the potassium rosinate instead of 1.4 parts by weight, and 0.4 parts by weight of the potassium oleate instead of 0.6 parts by weight, in Example 3, to prepare a graft copolymer particulate material.

During preparing the rubbery polymer latex, the total time consumed for polymerization was 23 hours, the gel content of the rubbery polymer latex obtained was 77%, and the average particle diameter of the rubbery polymer particles was 350 nm.

In addition, the final polymerization conversion ratio of the graft copolymer latex was 98.1%, and the average particle diameter of the graft copolymer particles was 370 nm.

### Example 8

The same method as in Example 3 was performed during preparing a graft copolymer except for injecting 0.3 parts by weight of the potassium oleate instead of 0.2 parts by weight, and 0.6 parts by weight of the t-butyl hydroperoxide instead of 0.4 parts by weight, in Example 3, to prepare a graft copolymer particulate material.

In addition, the final polymerization conversion ratio of the graft copolymer latex was 98.7%, and the average particle diameter of the graft copolymer particles was 307 nm.

### Comparative Example 1

The same method as in Example 1 was performed during preparing a graft copolymer latex except for injecting 73 parts by weight of the rubbery polymer latex based on the solid content instead of 79 parts by weight, 21.6 parts by weight of the methyl methacrylate instead of 16.8 parts by weight, 4.05 parts by weight of the n-butyl acrylate instead of 3.15 parts by weight, and 1.35 parts by weight of the styrene instead of 1.05 parts by weight, in Example 1, to prepare a graft copolymer particulate material.

In this case, the final polymerization conversion ratio of the graft copolymer latex was 98.3%, and the average particle diameter of the graft copolymer particles was 340 nm.

### Comparative Example 2

The same method as in Example 3 was performed during preparing a rubbery polymer latex except for injecting 1.7 parts by weight of the potassium rosinate instead of 1.4 parts by weight, and 0.9 parts by weight of the potassium oleate instead of 0.6 parts by weight, and during preparing a graft copolymer latex, 0.3 parts by weight of the potassium oleate instead of 0.2 parts by weight and 0.6 parts by weight of the t-butyl hydroperoxide instead of 0.4 parts by weight, in Example 3, to prepare a graft copolymer particulate material.

During preparing the rubbery polymer latex, the total time consumed for polymerization was 23 hours, the gel content of the rubbery polymer latex obtained was 77%, and the average particle diameter of the rubbery polymer particles was 220 nm.

In addition, the final polymerization conversion ratio of the graft copolymer latex was 98.7%, and the average particle diameter of the graft copolymer particles was 230 nm.

### Comparative Example 3

The same method as in Example 1 was performed during preparing a graft copolymer latex except for injecting 85 parts by weight of the rubbery polymer latex based on the solid content instead of 79 parts by weight, 12 parts by weight of the methyl methacrylate instead of 16.8 parts by weight, 2.25 parts by weight of the n-butyl acrylate instead of 3.15 parts by weight, and 0.75 parts by weight of the styrene instead of 1.05 parts by weight, in Example 1, to prepare a graft copolymer particulate material.

In this case, the final polymerization conversion ratio of the graft copolymer latex was 98.5%, and the average particle diameter of the graft copolymer particles was 305 nm.

### Experimental Examples

### Experimental Example 1

With respect to the rubbery polymers and graft copolymers prepared in Examples 1 to 8 and Comparative Examples 1 to 3, the average particle diameters of cores and graft copolymers were measured by a method below, and the thicknesses of the shells were calculated, and are shown in Tables 1 and 2 together with the contents of the components and the injection methods of a graft monomer during preparing the graft copolymers.

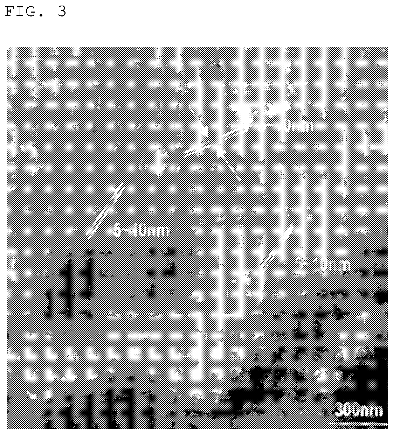

In addition, the graft copolymer prepared in Example 3 was dried in a vacuum oven to obtain a solid, and a thin foil was manufactured using a Microtome, the thin foil was stained with osmium tetroxide vapor to prepare a specimen, a picture was taken at 10,000x magnification using a transmission electron microscope with respect to the specimen, the thickness of the shell for each graft copolymer particle was measured, and an image with the thickness is shown in FIG. 3.
* Average particle diameters (nm) of core and graft copolymer: Each of rubbery polymer latexes and graft copolymer latexes prepared in Examples 1 to 8 and Comparative Examples 1 to 3, was diluted in distilled water in a concentration of 200 ppm, and the average particle diameter was measured using a dynamic light scattering (DSL) method according to ISO 22412 using NICOMP 380.
* Thickness of shell (nm): The thickness of the shell was calculated according to Mathematical Formula 1 below from the average particle diameter of the core and the average particle diameter of the graft copolymer measured. Thickness of shell (nm) = average particle diameter of graft copolymer (nm) - average particle diameter of core (nm)

**[Table 1]**

| Division | | | Example | | | | | | | |
|---|---|---|---|---|---|---|---|---|---|---|
| | | | 1 | 2 | 3 | 4 | 5 | 6 | 7 | 8 |
| Core | Rubbery polymer | (parts by weight) | 75 | 79 | 80 | 81 | 83 | 80 | 80 | 80 |
| | Average particle diameter | (nm) | 300 | 300 | 300 | 300 | 300 | 250 | 350 | 300 |
| Shell | Methyl methacrylate | (parts by weight) | 20. 0 | 16. 8 | 16. 0 | 15. 2 | 13. 6 | 16. 0 | 16. 0 | 16. 0 |
| | n-Butyl acrylate | (parts by weight) | 3.7 5 | 3.1 5 | 3.0 0 | 2.8 5 | 2.5 5 | 3.0 0 | 3.0 0 | 3.0 0 |
| | Styrene | (parts by weight) | 1.2 5 | 1.0 5 | 1.0 0 | 0.9 5 | 0.8 5 | 1.0 0 | 1.0 0 | 1.0 0 |
| | Graft monomer injection method | | Con tin uou s | Con tin uou s | Con tin uou s | Con tin uou s | Con tin uou s | Con tin uou s | Con tin uou s | Con tin uou s |
| | Thickness | (nm) | 25 | 20 | 18 | 15 | 10 | 20 | 20 | 7 |
| Graft copolymer | Average particle diameter | (nm) | 325 | 320 | 318 | 315 | 310 | 270 | 370 | 307 |

**[Table 2]**

| Division | | | Comparative Example | | |
|---|---|---|---|---|---|
| | | | 1 | 2 | 3 |
| Core | Rubbery polymer | (parts by weight) | 73 | 80 | 85 |
| | Average particle diameter | (nm) | 300 | 220 | 300 |
| Shell | Methyl methacrylate | (parts by weight) | 21.60 | 16.0 | 12.00 |
| | n-Butyl acrylate | (parts by weight) | 4.05 | 3.00 | 2.25 |
| | Styrene | (parts by weight) | 1.35 | 1.00 | 0.75 |
| | Graft monomer injection method | | Continuous | Continuous | Continuou s |
| | Thickness | (nm) | 40 | 10 | 5 |
| Graft copolymer | Average particle diameter | (nm) | 340 | 230 | 305 |

As shown in Table 1 above, it could be confirmed that the graft copolymers prepared in Examples 1 to 8 included the core in the range defined in the present invention, and the thickness of the shell was controlled.

In addition, as shown in FIG. 3, it could be also confirmed that the graft copolymer prepared in Example 3 showed the controlled thickness of the shell according to the range defined in the present invention, through the transmission electron microscope.

On the contrary, as shown in Table 2 above, it could be confirmed that the thickness of the shell was increased by the reduction of the core content in Comparative Example 1, the average particle diameter of the graft copolymer was reduced by the reduction of the average particle diameter of the core in Comparative Example 2, and the thickness of the shell was decreased by the increase of the core content in Comparative Example 3.

### Experimental Example 2

By using the graft copolymer particulate materials prepared in Examples 1 to 8 and Comparative Examples 1 to 3, epoxy resin compositions in which graft copolymers were dispersed in curable resin compositions were prepared by a method below.

### <Preparation of epoxy resin composition in which graft copolymer is dispersed>

To a revolution-rotation mixer (planetary mixer, KMTECH, KPLM-0.6) set to 70°C, 63 parts by weight of an epoxy resin (Kukdo Chemical Co., YD-128), and 37 parts by weight of the graft copolymer particulate material prepared in each of Examples 1 to 8 and Comparative Examples 1 to 3 were injected, based on total 100 parts by weight of the epoxy resin and the graft copolymer, and the graft copolymer particulate material was dispersed in the epoxy resin by stirring at 10 rpm for 1 hour, at 80 rpm for 2 hours, and at 60 rpm for 10 hours to prepare an epoxy resin composition in which the graft copolymer was dispersed.

The viscosity was measured for the epoxy resin compositions thus prepared and shown in Tables 3 and 4 below.

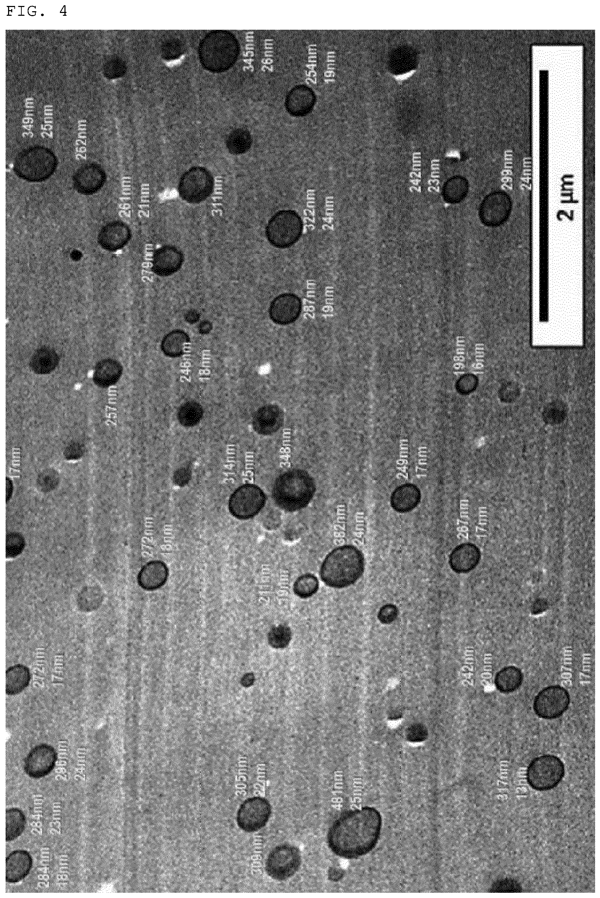

In addition, with respect to the epoxy resin composition prepared using the graft copolymer of Example 3, curing was performed using polyetheramine at room temperature, a thin foil was manufactured using a Microtome, the thin foil was stained with osmium tetroxide vapor to prepare a specimen, a picture was taken at 25,000x magnification using a transmission electron microscope with respect to the specimen, the particle size of the core and the thickness of the shell for each dispersion phase were measured, and an image therewith is shown in FIG. 4.

In this case, the average particle size of the core calculated from the arithmetic mean of the particle sizes of the cores measured was 294 nm, and the average thickness of the shell calculated from the arithmetic mean of the thicknesses of the shells measured was 19.5 nm.
* Viscosity at 25°C (Pa.s): With respect to the epoxy resin compositions prepared, the viscosity of 25°C was measured using Rheometer (Anton paar Co., MRC 302), and viscosity values at a shear rate of 2.4 s⁻¹, 100 s are shown.

**[Table 3]**

| Division | | Example | | | | | | | |
|---|---|---|---|---|---|---|---|---|---|
| | | 1 | 2 | 3 | 4 | 5 | 6 | 7 | 8 |
| Viscosity at 25°C | (Pa. s) | 1,29 1 | 1,01 3 | 1,07 6 | 1,14 1 | 1,3 92 | 1,3 48 | 1,2 14 | 1,4 51 |

**[Table 4]**

| Division | Comparative Example | | | |
|---|---|---|---|---|
| | 1 | 2 | 3 | |
| Viscosity at 25°C | (Pa.s) | 1,778 | 2,383 | 2,107 |

As shown in Tables 3 and 4, it could be confirmed that the epoxy resin compositions including the graft copolymers of Examples 1 to 8 prepared to satisfy the defined range of the present invention, showed reduced viscosity when compared to the epoxy resin compositions including the graft copolymers of Comparative Examples 1 to 3, and from the results, it could be confirmed that the graft copolymer according to the present invention has excellent particulate dispersibility with respect to a curable resin such as an epoxy resin.

In addition, as shown in FIG. 4, it could be confirmed through a transmission electron microscope that in the epoxy resin composition in which the graft copolymer prepared in Example 3 was dispersed, the graft copolymer in a dispersion phase showed the controlled particle size of the core according to the range of the average particle diameter of the core and showed the controlled thickness of the shell according to the range of the thickness of the shell, defined in the present invention.

### Experimental Example 3

By using the epoxy resin composition prepared in Experimental Example 2, an adhesive composition was prepared by a method below.

### <Adhesive composition>

An epoxy resin (Kukdo Chemical Co., YD-128) as a main agent, an epoxy resin composition (a weight ratio of epoxy resin: graft copolymer particulate material=60:40) according to each of Examples 1 to 8 and Comparative Examples 1 to 3, prepared in Experimental Example 2, a urethane resin (Adeka Co., QR-9466), a diluent (Kukdo FINECHEM Co., KF DPIOL-DE208), a filler (fumed silica, Carbot Co., CAB-O-SIL TS-720), a moisture remover (calcium carbonate, Youyeong Materials Co., UNI-OX), a curing agent (Evonik Co., Dicyanex 1400F), and a curing accelerator (Evonik Co., Amicure UR7/10) were mixed in the amounts recorded in Table 3, using a paste mixer (KMTECH Co., PDM-300) at 600 rpm revolution and at 500 rpm rotation for 3 minutes, and defoamed at 600 rpm revolution and at 200 rpm rotation for 5 minutes to prepare an adhesive composition. In this case, the amount of each component was injected based on 100 parts by weight of the total amount of the main agent, the toughening agent, the urethane resin and the diluent.

With respect to the adhesive composition prepared, viscosity, impact peel strength and dynamic viscoelasticity were measured by methods below and shown in Tables 5 and 6 below.

Meanwhile, in the impact peel strength and the dynamic viscoelasticity, each index was calculated according to Mathematical Formula 2 below. Index = {(resultant value measured in each of Examples and Comparative Examples)/(resultant value of Example 1)} X 100
* Impact peel strength (N/mm): Impact peel strength of the adhesive composition prepared was measured according to the standard of ISO 11343. The size of a specimen was 90 mm × 20 mm × 1.6 T (mm), and the size of one side for applying the adhesive composition was 30 mm × 20 mm. Contaminants were removed from the one side of the specimen using ethanol, and the adhesive composition prepared was applied. The thickness of the adhesive composition was maintained constant using microbeads, the top was covered with another specimen to fix, and curing was performed at 180°C for 30 minutes. After curing, the resultant was stabilized at 25°C and -35°C for 1 hour or more each, and a load was applied in a rate of 2 m/sec using an impact strength tester (Instron Co., 9350) to measure impact peel strength according to a shear strength. In this case, the results measured for each of the Examples and Comparative Examples were indexed and shown based on the resultant value measured for Example 1, and the higher index means better impact resistance.
* Dynamic viscoelasticity (G', MPa): The adhesive composition prepared was applied in a press mold to a thickness of 1 mm and pressed at 150°C for 30 minutes with a pressure of 20 MPa to cure. Then, the specimen thus cured was cut into a size of a width of 12.5 mm, a length of 63.5 mm and a thickness of 1 mm, and a dynamic viscoelasticity analysis (temperature from -100°C to 200°C, temperature rise rate of 5°C/min, torsional mode, frequency of 1 Hz, and strain of 0.10) was performed using G2 (TA Instrument Co.) of Advanced Rheometric Expansion System (ARES). On a storage modulus (G') change graph in accordance with temperature, derived by the dynamic viscoelasticity analysis, G' values shown at 25°C and -35°C were confirmed. In this case, the results measured for each of the Examples and Comparative Examples were indexed and shown based on the resultant value measured for Example 1, and the lower index means better impact resistance according to destruction strength.

**[Table 5]**

| Division | | | Example | | | | | | | |
|---|---|---|---|---|---|---|---|---|---|---|
| | | | 1 | 2 | 3 | 4 | 5 | 6 | 7 | 8 |
| Adhesi ve compos ition | Main agent | (parts by weight) | 60.0 | 60.0 | 60.0 | 60.0 | 60.0 | 60.0 | 60.0 | 60.0 |
| | Toughen ing agent | (parts by weight) | 15.0 | 15.0 | 15.0 | 15.0 | 15.0 | 15.0 | 15.0 | 15.0 |
| | Urethan e resin | (parts by weight) | 20.0 | 20.0 | 20.0 | 20.0 | 20.0 | 20.0 | 20.0 | 20.0 |
| | Diluent | (parts by weight) | 5.0 | 5.0 | 5.0 | 5.0 | 5.0 | 5.0 | 5.0 | 5.0 |
| | Filler | (parts by weight) | 3.0 | 3.0 | 3.0 | 3.0 | 3.0 | 3.0 | 3.0 | 3.0 |
| | Moistur e remover | (parts by weight) | 3.0 | 3.0 | 3.0 | 3.0 | 3.0 | 3.0 | 3.0 | 3.0 |
| | Curing agent | (parts by weight) | 6.0 | 6.0 | 6.0 | 6.0 | 6.0 | 6.0 | 6.0 | 6.0 |
| | Curing acceler ator | (parts by weight) | 0.6 | 0.6 | 0.6 | 0.6 | 0.6 | 0.6 | 0.6 | 0.6 |
| Impact peel streng th | 25°C | (N/mm) | 32.5 | 33.1 | 33.3 | 33.6 | 33.9 | 33.2 | 33.8 | 32.1 |
| | | index | 100 | 102 | 102 | 103 | 104 | 102 | 104 | 99 |
| | -35°C | (N/mm) | 27.2 | 28.7 | 28.3 | 28.1 | 29.1 | 27.9 | 29.1 | 27.8 |
| | | index | 100 | 106 | 104 | 103 | 107 | 103 | 107 | 102 |
| G' | 25°C | (MPa) | 615 | 560 | 568 | 571 | 540 | 559 | 543 | 594 |
| | | index | 100 | 91 | 92 | 93 | 88 | 91 | 88 | 97 |
| | -35°C | (MPa) | 1, 03 6 | 989 | 993 | 999 | 961 | 999 | 950 | 1,00 6 |
| | | index | 100 | 95 | 96 | 96 | 93 | 96 | 92 | 97 |

**[Table 6]**

| Division | | | Comparative Example | | |
|---|---|---|---|---|---|
| | | | 1 | 2 | 3 |
| Adhesive composition | Main agent | (parts by weight) | 60.0 | 60.0 | 60.0 |
| | Toughening agent | (parts by weight) | 15.0 | 15.0 | 15.0 |
| | Urethane resin | (parts by weight) | 20.0 | 20.0 | 20.0 |
| | Diluent | (parts by weight) | 5.0 | 5.0 | 5.0 |
| | Filler | (parts by weight) | 3.0 | 3.0 | 3.0 |
| | Moisture remover | (parts by weight) | 3.0 | 3.0 | 3.0 |
| | Curing agent | (parts by weight) | 6.0 | 6.0 | 6.0 |
| | Curing accelerate r | (parts by weight) | 0.6 | 0.6 | 0.6 |
| Impact peel strength | 25°C | (N/mm) | 31.0 | 32.0 | 34.2 |
| | | index | 95 | 98 | 105 |
| | -35°C | (N/mm) | 21.0 | 25.3 | 29.1 |
| | | index | 77 | 93 | 107 |
| G' | 25°C | (MPa) | 795 | 707 | 520 |
| | | index | 129 | 115 | 85 |
| | -35°C | (MPa) | 1, 454 | 1,217 | 957 |
| | | index | 140 | 117 | 92 |

As shown in Tables 5 and 6, it could be confirmed that the adhesive compositions prepared by including the curable resin compositions prepared according to Examples 1 to 8 of the present invention as toughening agents had low viscosity and excellent processability and workability, had high impact peel strength and excellent impact resistance, and had low storage modulus (G') according to dynamic viscoelasticity properties and excellent impact resistance according to destruction strength.

On the contrary, it could be confirmed that in the case of the adhesive composition prepared by including the curable resin composition including the graft copolymer of Comparative Example 1, having the low core content and the large thickness of the shell, as a toughening agent, the interaction between the shell and the urethane resin and epoxy resin occurred, and the shell was swelled to degrade dispersibility, and accordingly, the impact peel strength was inferior both at room temperature and at a low temperature, and in addition, the impact resistance was inferior both at room temperature and at a low temperature.

In addition, it could be confirmed that in the case of the adhesive composition prepared by including the curable resin composition including the graft copolymer of Comparative Example 2, having the small average particle diameter of the core, as a toughening agent, according to the reduction of the average particle diameter of the core, the average particle diameter of the graft copolymer was also reduced. Accordingly, during dispersing the graft copolymer in the curable resin, viscosity increased, and impact peel strength was inferior both at room temperature and at a low temperature.

In addition, it could be confirmed that, in the case of the adhesive composition prepared by including the curable resin composition including the graft copolymer of Comparative Example 3, having the high core content and the small thickness of the shell, as a toughening agent, though the swelling according to the interaction of the shell and the urethane resin and epoxy resin could be reduced, compatibility was reduced due to the reduction of the shell itself, and the impact resistance according to destruction strength was inferior both at room temperature and at a low temperature.

From such results, it could be confirmed that the graft copolymer of the present invention has excellent particulate dispersibility with respect to a curable resin such as epoxy resin, and could be dispersed in a curable resin composition by a particulate phase dispersion method. Accordingly, the curable resin composition may apply the graft copolymer in a particulate phase as an impact reinforcing agent, may have excellent productivity, and may have excellent mechanical properties such as impact resistance by the graft copolymer dispersed in the curable resin composition. Accordingly, the adhesive composition including the curable resin composition as a toughening agent may show excellent impact resistance and adhesive strength.

## Claims

1. A graft copolymer of a core-shell type, comprising a core comprising a rubbery polymer; and a shell formed by graft polymerizing a graft monomer to the rubbery polymer, wherein
the rubbery polymer comprises a conjugated diene-based monomer unit,
the graft copolymer comprises the core in 75 wt% to 83 wt%,
the core has an average particle diameter of 250 nm to 400 nm, and
a thickness of the shell is 3 nm to 25 nm.

2. The graft copolymer according to claim 1, wherein the graft monomer comprises an alkyl (meth)acrylate-based monomer.

3. The graft copolymer according to claim 1, wherein the graft monomer comprises a methyl (meth)acrylate monomer, an alkyl (meth)acrylate-based monomer of 2 to 12 carbon atoms and a crosslinkable monomer.

4. The graft copolymer according to claim 3, wherein the crosslinkable monomer is polyethylene glycol diacrylate or allyl methacrylate.

5. The graft copolymer according to claim 1, wherein the graft monomer further comprises an aromatic vinyl-based monomer.

6. The graft copolymer according to claim 1, wherein the graft copolymer comprises the core in 79 wt% to 81 wt%, and the shell in 19 wt% to 21 wt%.

7. The graft copolymer according to claim 1, wherein the thickness of the shell is 5 nm to 22nm.

8. The graft copolymer according to claim 1, wherein the graft copolymer has an average particle diameter of 250 nm to 500 nm.

9. A curable resin composition comprising a continuous phase and a dispersion phase, wherein
the continuous phase comprises a curable resin, and
the dispersion phase comprises the graft copolymer according to any one of claim 1 to claim 8.

10. The curable resin composition according to claim 9, wherein the curable resin composition comprises the continuous phase in 50 wt% to 99 wt% and the dispersion phase in 1 wt% to 50 wt%.

11. The curable resin composition according to claim 9, wherein the curable resin is an epoxy resin.

12. The curable resin composition according to claim 9, wherein the curable resin composition has a viscosity at 25°C at 2.4 l/s of 1,500 Pa.s or less.

13. An adhesive composition comprising a main agent, a toughening agent and a urethane resin, wherein
the toughening agent is the curable resin composition according to claim 9, and
the toughening agent is comprised in 10 wt% to 20 wt%.

14. The adhesive composition according to claim 13, wherein the adhesive composition has a G' value shown at -35°C of 900 MPa to 1,100 MPa, on a storage modulus (G') change graph in accordance with temperature, derived by dynamic viscoelasticity analysis (torsional mode, frequency of 1 Hz, strain of 0.1 %, and temperature rise rate of 5°C/min) by Advanced Rheometric Expansion System (ARES) on a cured specimen.

15. The adhesive composition according to claim 13, wherein the adhesive composition has a G' value shown at 25°C of 530 MPa to 630 MPa, on a storage modulus (G') change graph in accordance with temperature, derived by dynamic viscoelasticity analysis (torsional mode, frequency of 1 Hz, strain of 0.1 %, and temperature rise rate of 5°C/min) by Advanced Rheometric Expansion System (ARES) on a cured specimen.

16. The adhesive composition according to claim 13, wherein the adhesive composition has a viscosity at 25°C at 2.4 l/s of 250 Pa.s to 750 Pa.s.
